# EUROPEAN PATENT APPLICATION

(11) **EP 4 598 245 A1**
(43) Date of publication of application: **06.08.2025**
(21) Application number: 23872876.0
(22) Date of filing: 13.09.2023
(51) Int. Cl.: H04W 74/08, H04W 72/25, H04W 72/04, H04L 1/18, H04W 24/08, H04W 92/18, H04W 74/00, H04W 16/14

(54) **METHOD AND APPARATUS FOR CHANNEL ACCESS IN UNLICENSED BAND COMMUNICATION**

(30) Priority: 29.09.2022 KR 20220124151; 15.02.2023 KR 20230019849; 10.07.2023 KR 20230089425; 02.08.2023 KR 20230100762
(71) Applicant: Electronics and Telecommunications Research Institute, Daejeon 34129 (KR)
(72) Inventor: JUNG, Hoi Yoon, Daejeon 34129 (KR); PARK, Sung Ik, Daejeon 34129 (KR); UM, Jung Sun, Daejeon 34129 (KR); HUR, Nam Ho, Daejeon 34129 (KR)
(74) Representative: Betten & Resch
(86) International application number: PCT/KR2023/013703
(87) International publication number: WO 2024/071757

(57) **Abstract**

A method and apparatus for channel access in unlicensed band communication are disclosed. The method for a first terminal comprises the steps of: receiving, from a second terminal, shared information of a COT initiated by the second terminal; on the basis of the shared information, determining whether or not an SL transmission by the first terminal may be performed in the COT; and if the SL transmission may be performed in the COT, performing the SL transmission in the COT shared by the second terminal.

## Description

### [Technical Field]

The present disclosure relates to a channel access technique in a communication system, and more particularly, to a channel access technique in a communication system using an unlicensed band.

### [Background Art]

With the advancement of information and communication technology, various wireless communication technologies are being developed. The representative wireless communication technologies may be long term evolution (LTE), LTE-advanced (LTE-A), new radio (NR), and the like specified as the 3^{rd} generation partnership project (3GPP) standards. The LTE and/or LTE-A may be 4^{th} generation (4G) communication technology. The NR may be a 5^{th} generation (5G) communication technology.

The 5G communication system (e.g., communication system supporting the NR) using a higher frequency band (e.g., a frequency band of 6GHz or above) than a frequency band (e.g., a frequency band of 6GHz or below) of the 4G communication system is being considered for processing of soaring wireless data after commercialization of the 4G communication system (e.g., communication system supporting the LTE and/or LTE-A). The 5G communication system may support enhanced Mobile BroadBand (eMBB), Ultra Reliable Low Latency Communication (URLLC), and/or Massive Machine Type Communication (mMTC).

The 5G communication system may support sidelink communication. In sidelink communication, communication can be performed between terminals. For example, a first terminal may transmit signals, information, and/or data to a second terminal, and the second terminal may receive the signals, information, and/or data from the first terminal. Channels for sidelink communication may be a physical sidelink broadcast channel (PSBCH), physical sidelink shared channel (PSSCH), physical sidelink control channel (PSCCH), and/or physical sidelink feedback channel (PSFCH).

The communication system can support communication in an unlicensed band. A channel access procedure may be required for unlicensed band communication. In sidelink communication between terminals, the efficiency of the communication system can be improved depending on a channel access procedure of the terminal. Accordingly, a channel access procedure for terminals in unlicensed band communication are required.

Meanwhile, the above-described technologies are described to enhance the understanding of the background of the present disclosure, and they may include non-prior arts that are not already known to those of ordinary skill in the art.

### [Disclosure]

### [Technical Problem]

The present disclosure is directed to providing a method and an apparatus for channel access in unlicensed band communication.

### [Technical Solution]

A method of a first terminal, according to an exemplary embodiment of the present disclosure for achieving the above-described objective, may comprise: receiving, from a second terminal, sharing information of a channel occupancy time (COT) initiated by the second terminal; determining whether sidelink (SL) transmission of the first terminal is possible within the COT based on the sharing information; and in response to determining that the SL communication is possible within the COT, performing the SL transmission within the COT shared by the second terminal.

The sharing information may include at least one of a source identifier (ID), destination ID, channel access priority class (CAPC), remaining COT duration, or frequency domain information of the COT.

The COT may be initiated by a type 1 listen-before-talk (LBT) operation of the second terminal, the SL transmission of the first terminal within the COT may be performed based on a type 2 LBT operation, the type 1 LBT operation may be performed in a variable time period, and the type 2 LBT operation may be performed in a fixed time period.

When the SL transmission is unicast SL transmission, a source of the unicast SL transmission is equal to a destination of transmission of the second terminal, and a destination of the unicast SL transmission is equal to a source of transmission of the second terminal, the unicast SL transmission may be performed within the COT shared by the second terminal.

When the SL transmission is groupcast SL transmission and a destination of the groupcast SL transmission is equal to a destination of transmission of the second terminal, the groupcast SL transmission may be performed within the COT shared by the second terminal.

When the SL transmission is broadcast SL transmission and a destination of the broadcast SL transmission is equal to a destination of transmission of the second terminal, the broadcast SL transmission may be performed within the COT shared by the second terminal.

The performing of the SL transmission may comprise: transmitting a sidelink-synchronization signal block (S-SSB) within the COT.

When the SL transmission is physical sidelink feedback channel (PSFCH) transmission, and the PSFCH transmission includes hybrid automatic repeat request (HARQ) feedback transmission for the second terminal, the PSFCH transmission may be performed within the COT shared by the second terminal.

When a resource for the SL transmission belongs to a resource of the COT, the SL transmission may be performed within the COT.

A first terminal, according to an exemplary embodiment of the present disclosure for achieving the above-described objective, may comprise: at least one processor, and the at least one processor may cause the first terminal to perform: receiving, from a second terminal, sharing information of a channel occupancy time (COT) initiated by the second terminal; determining whether sidelink (SL) transmission of the first terminal is possible within the COT based on the sharing information; and in response to determining that the SL communication is possible within the COT, performing the SL transmission within the COT shared by the second terminal.

The sharing information may include at least one of a source identifier (ID), destination ID, channel access priority class (CAPC), remaining COT duration, or frequency domain information of the COT.

The COT may be initiated by a type 1 listen-before-talk (LBT) operation of the second terminal, the SL transmission of the first terminal within the COT may be performed based on a type 2 LBT operation, the type 1 LBT operation may be performed in a variable time period, and the type 2 LBT operation may be performed in a fixed time period.

When the SL transmission is unicast SL transmission, a source of the unicast SL transmission is equal to a destination of transmission of the second terminal, and a destination of the unicast SL transmission is equal to a source of transmission of the second terminal, the unicast SL transmission may be performed within the COT shared by the second terminal.

When the SL transmission is groupcast SL transmission and a destination of the groupcast SL transmission is equal to a destination of transmission of the second terminal, the groupcast SL transmission may be performed within the COT shared by the second terminal.

When the SL transmission is broadcast SL transmission and a destination of the broadcast SL transmission is equal to a destination of transmission of the second terminal, the broadcast SL transmission may be performed within the COT shared by the second terminal.

In the performing of the SL transmission, the at least one processor may further cause the first terminal to perform: transmitting a sidelink-synchronization signal block (S-SSB) within the COT.

When the SL transmission is physical sidelink feedback channel (PSFCH) transmission, and the PSFCH transmission includes hybrid automatic repeat request (HARQ) feedback transmission for the second terminal, the PSFCH transmission may be performed within the COT shared by the second terminal.

When a resource for the SL transmission belongs to a resource of the COT, the SL transmission may be performed within the COT.

### [Advantageous Effects]

According to the present disclosure, a first terminal can initiate a channel occupancy time (COT) and share the COT with a second terminal. When specific condition(s) are satisfied, the second terminal may perform sidelink transmission within the COT shared by the first terminal. According to the above-described operation, the channel access efficiency of the terminal in unlicensed band communication can be increased. Therefore, the performance of the communication system can be improved.

### [Description of Drawings]

FIG. 1 is a conceptual diagram illustrating a first exemplary embodiment of a communication network.
FIG. 2 is a block diagram illustrating a first exemplary embodiment of a communication node constituting a communication network.
FIG. 3 is a conceptual diagram illustrating a first exemplary embodiment of a system frame in a communication network.
FIG. 4 is a conceptual diagram illustrating a first exemplary embodiment of a subframe in a communication network.
FIG. 5 is a conceptual diagram illustrating a first exemplary embodiment of a slot in a communication network.
FIG. 6 is a conceptual diagram illustrating a first exemplary embodiment of time-frequency resources in a communication network.
FIG. 7 is a conceptual diagram illustrating a first exemplary embodiment of configuration of a resource pool, SL signals, and SL channels within an SL bandwidth part (BWP).
FIG. 8 is a conceptual diagram illustrating a first exemplary embodiment of SL resources.
FIG. 9 is a sequence chart illustrating a first exemplary embodiment of a communication method in an unlicensed band.
FIG. 10 is a flowchart illustrating a second exemplary embodiment of a communication method in an unlicensed band.
FIG. 11 is a flowchart illustrating a third exemplary embodiment of a communication method in an unlicensed band.
FIG. 12 is a flowchart illustrating a fourth exemplary embodiment of a communication method in an unlicensed band.

### [Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In exemplary embodiments of the present disclosure, "(re)transmission" may mean "transmission", "retransmission", or "transmission and retransmission", "(re)configuration" may mean "configuration", "reconfiguration", or "configuration and reconfiguration", "(re)connection" may mean "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, preferred exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication network to which exemplary embodiments according to the present disclosure are applied will be described. The communication network to which the exemplary embodiments according to the present disclosure are applied is not limited to the contents described below, and the exemplary embodiments according to the present disclosure may be applied to various communication networks. Here, the communication network may be used in the same sense as a communication system. A communication network may refer to a wireless communication network, and a communication system may refer to a wireless communication system.

In the present disclosure, "an operation (e.g., transmission operation) is configured" may mean that "configuration information (e.g., information element(s) or parameter(s)) for the operation and/or information indicating to perform the operation is signaled". "Information element(s) (e.g., parameter(s)) are configured" may mean that "corresponding information element(s) are signaled". In the present disclosure, signaling may be at least one of system information (SI) signaling (e.g., transmission of system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

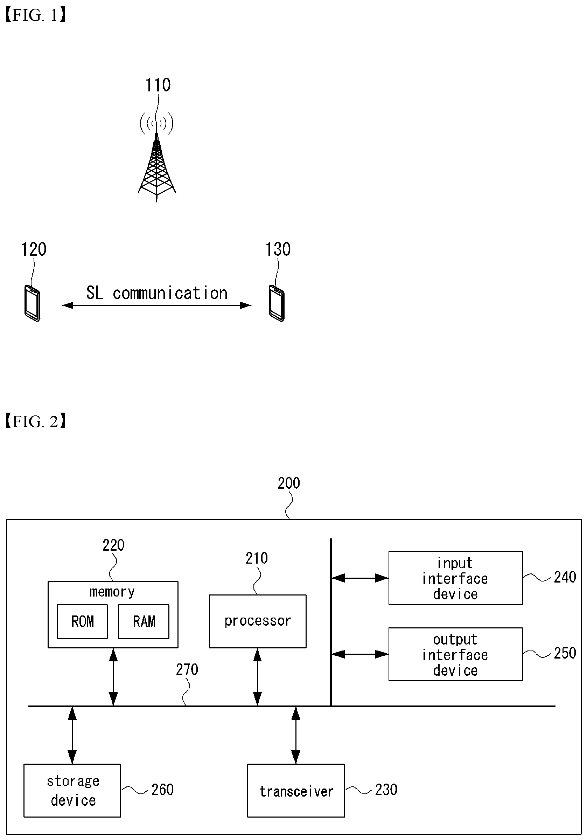

FIG. 1 is a conceptual diagram illustrating a first exemplary embodiment of a communication network.

Referring to FIG. 1, a base station 110 may support cellular communication (e.g., long term evolution (LTE), LTE-advance (LTE-A), LTE-A Pro, LTE-unlicensed (LTE-U), new radio (NR), and NR-unlicensed (NR-U) specified as the 3^{rd} generation partnership project (3GPP) standards), or the like. The base station 110 may support multiple-input multiple-output (MIMO) (e.g., single-user MIMO (SU-MIMO), multiuser MIMO (MU-MIMO), massive MIMO, etc.), coordinated multipoint (CoMP), carrier aggregation (CA), or the like.

A first terminal 120 and a second terminal 130 may perform sidelink communication. The sidelink communication may be performed based on a mode 1 or mode 2. When the mode 1 is used, sidelink communication between the first terminal 120 and the second terminal 130 may be performed using resource(s) allocated by the base station 110. When the mode 2 is used, sidelink communication between the first terminal 120 and the second terminal 130 may be performed using resource(s) selected by the first terminal 120 or the second terminal 130.

The communication node (i.e., base station, terminal, etc.) constituting the communication network described above may support a code division multiple access (CDMA) based communication protocol, a wideband CDMA (WCDMA) based communication protocol, a time division multiple access (TDMA) based communication protocol, a frequency division multiple access (FDMA) based communication protocol, a single carrier-FDMA (SC-FDMA) based communication protocol, an orthogonal frequency division multiplexing (OFDM) based communication protocol, an orthogonal frequency division multiple access (OFDMA) based communication protocol, or the like.

Among the communication nodes, the base station may be referred to as a Node B, evolved Node B, 5G Node B (gNodeB), base transceiver station (BTS), radio base station, radio transceiver, access point, access node, transmission/reception point (Tx/Rx Point), or the like. Among the communication nodes, the terminal may be referred to as a user equipment (UE), access terminal, mobile terminal, station, subscriber station, portable subscriber station, mobile station, node, device, or the like. The communication node may have the following structure.

FIG. 2 is a block diagram illustrating a first exemplary embodiment of a communication node constituting a communication network.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Hereinafter, operation methods of a communication node in a communication network will be described. Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a first terminal (e.g., transmitting terminal) is described, a corresponding second terminal (e.g., receiving terminal) may perform an operation corresponding to the operation of the first terminal. Conversely, when an operation of the second terminal is described, the corresponding first terminal may perform an operation corresponding to the operation of the second terminal.

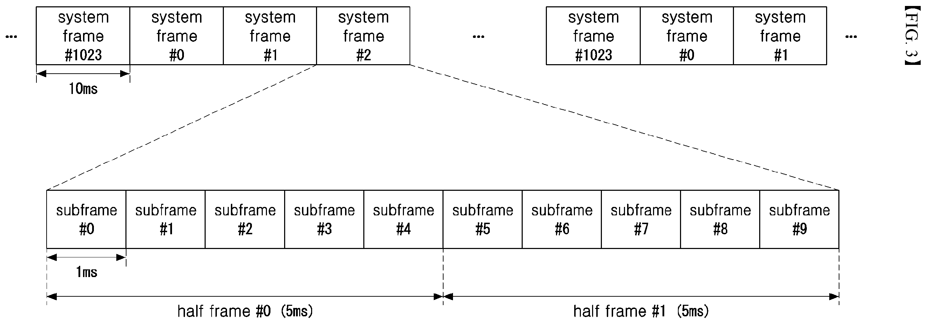

FIG. 3 is a conceptual diagram illustrating a first exemplary embodiment of a system frame in a communication network.

Referring to FIG. 3, time resources in a communication network may be divided into frames. For example, system frames each of which has a length of 10 milliseconds (ms) may be configured consecutively in the time domain of the communication network. System frame numbers (SFNs) may be set to #0 to #1023. In this case, 1024 system frames may be repeated in the time domain of the communication network. For example, an SFN of a system frame after the system frame #1023 may be set to #0.

One system frame may comprise two half frames, and the length of one half frame may be 5 ms. A half frame located in a starting region of a system frame may be referred to as a 'half frame #0', and a half frame located in an ending region of the system frame may be referred to as a 'half frame #1'. The system frame may include 10 subframes, and the length of one subframe may be 1 ms. 10 subframes within one system frame may be referred to as 'subframes # 0 to #9'.

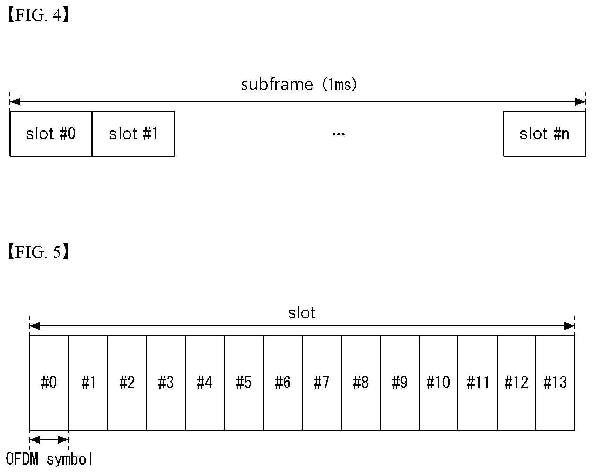

FIG. 4 is a conceptual diagram illustrating a first exemplary embodiment of a subframe in a communication network.

Referring to FIG. 4, one subframe may include n slots, and n may be a natural number. Accordingly, one subframe may be composed of one or more slots.

FIG. 5 is a conceptual diagram illustrating a first exemplary embodiment of a slot in a communication network.

Referring to FIG. 5, one slot may comprise one or more symbols. One slot shown in FIG. 5 may be composed of 14 symbols. Here, the length of the slot may vary depending on the number of symbols included in the slot and the length of the symbol. Alternatively, the length of the slot may vary according to a numerology. When a subcarrier spacing is 15 kHz (e.g., µ = 0), the length of the slot may be 1 ms. In this case, one system frame may include 10 slots. When the subcarrier spacing is 30 kHz (e.g., µ = 1), the length of the slot may be 0.5 ms. In this case, one system frame may include 20 slots.

When the subcarrier spacing is 60 kHz (e.g., µ = 2), the length of the slot may be 0.25 ms. In this case, one system frame may include 40 slots. When the subcarrier spacing is 120 kHz (e.g., µ = 3), the length of the slot may be 0.125 ms. In this case, one system frame may include 80 slots. When the subcarrier spacing is 240 kHz (e.g., µ = 4), the length of the slot may be 0.0625 ms. In this case, one system frame may include 160 slots.

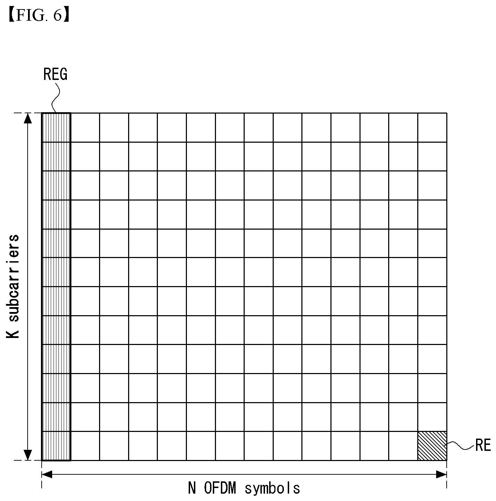

FIG. 6 is a conceptual diagram illustrating a first exemplary embodiment of time-frequency resources in a communication network.

Referring to FIG. 6, a resource configured with one OFDM symbol in the time domain and one subcarrier in the frequency domain may be defined as a 'resource element (RE)'. Resources configured with one OFDM symbol in the time domain and K subcarriers in the frequency domain may be defined as a 'resource element group (REG)'. One REG may include K REs. The REG may be used as a basic unit of resource allocation in the frequency domain. K may be a natural number. For example, K may be 12. N may be a natural number. N in the slot shown in FIG. 5 may be 14, and N in the slot shown in FIG. 6 may be 7. The N OFDM symbols may be used as a basic unit of resource allocation in the time domain.

Methods for transmitting and receiving data in a communication network will be described. In downlink communication, downlink data may be transmitted through a physical downlink shared channel (PDSCH). In uplink communication, uplink data may be transmitted through a physical uplink shared channel (PUSCH). In the present disclosure, a PDSCH may refer to downlink data or a resource in which the downlink data is transmitted and received, and a PUSCH may refer to uplink data or a resource in which the uplink data is transmitted and received. A base station may transmit downlink control information (DCI) including configuration information (e.g., resource allocation information, scheduling information) of a PDSCH on a physical downlink control channel (PDCCH). In the present disclosure, a PDCCH may refer to a DCI (e.g., control information) or a resource in which the DCI is transmitted.

A terminal may receive the DCI on the PDCCH and identify the configuration information of the PDSCH included in the DCI. For example, the configuration information of the PDSCH may include time domain resource assignment (TDRA), frequency domain resource assignment (FDRA), and/or modulation and coding scheme (MCS) information. The TDRA may indicate a resource region of the PDSCH in the time domain. The FDRA may indicate a resource region of the PDSCH in the frequency domain. The MCS information may indicate an MCS level or MCS index.

Sidelink (SL) communication may be performed in the communication network. The SL communication may be performed in a licensed band and/or an unlicensed band. The SL communication in an unlicensed band may be referred to as sidelink-unlicensed (SL-U) communication or unlicensed-sidelink (U-SL) communication. SL resources may be used for transmission of SL signals and/or channels. The SL resources may be configured on a resource pool basis. A resource pool may be referred to as an SL resource pool. The resource pool may include a Tx resource pool and/or an Rx resource pool. The Tx resource pool may be used for SL transmission, and the Rx resource pool may be used for SL reception. The Tx resource pool and the Rx resource pool may be distinguished from each other. The Tx resource pool and the Rx resource pool may be configured independently. In the present disclosure, SL transmission may be one of unicast SL transmission, groupcast SL transmission, multicast SL transmission, or broadcast SL transmission.

In the time domain, a resource pool may include one or more slots, and in the frequency domain, a resource pool may include one or more subchannels. One subchannel may include N_{PRB} physical resource blocks (PRBs). N_{PRB} may be one of 10, 12, 15, 20, 25, 50, 75, or 100. The resource pool may be configured periodically. For example, the resource pool may be configured at a periodicity of 10240 milliseconds (ms) in the time domain. Some slots among all slots belonging to a period corresponding to the periodicity of 10240ms may be configured as the resource pool. Depending on a time division duplex (TDD) configuration, slot(s) including a downlink (DL) symbol may not be configured as the resource pool. Slot(s) including resources in which a sidelink-synchronization signal block (S-SSB) can be transmitted may not be configured as the resource pool. Slot(s) configurable as the resource pool may be defined by a bitmap. In other words, the bitmap may indicate slot(s) configurable as the resource pool.

An SL channel may be used for transmission and reception of traffic (e.g., data), management information, and/or control information (e.g., control information related to scheduling) related to SL services. The SL channel may include a physical sidelink broadcast channel (PSBCH), a physical sidelink shared channel (PSSCH), a physical sidelink control channel (PSCCH), and/or a physical sidelink feedback channel (PSFCH). The SL signal may include a synchronization signal (e.g., sidelink-primary synchronization signal (S-PSS), sidelink-secondary synchronization signal (S-SSS)) and/or a reference signal (e.g., demodulation reference signal (DMRS), channel state information-reference signal (CSI-RS), phase tracking (PT)-RS, and positioning reference signal (PRS)).

The PSSCH may be a channel used for transmission and reception of a transport block (TB), data, and/or traffic. The PSCCH may be a channel used for transmitting and receiving control information. The PSFCH may be a channel used for transmission and reception of a hybrid automatic repeat request (HARQ) feedback indicating a reception status of the PSSCH. The S-SSB may include at least one of the PSBCH, S-PSS, or S-SSS. The S-SSB may further include a DMRS. Synchronization between terminals may be performed using the synchronization signals (e.g., S-PSS and/or S-SSS).

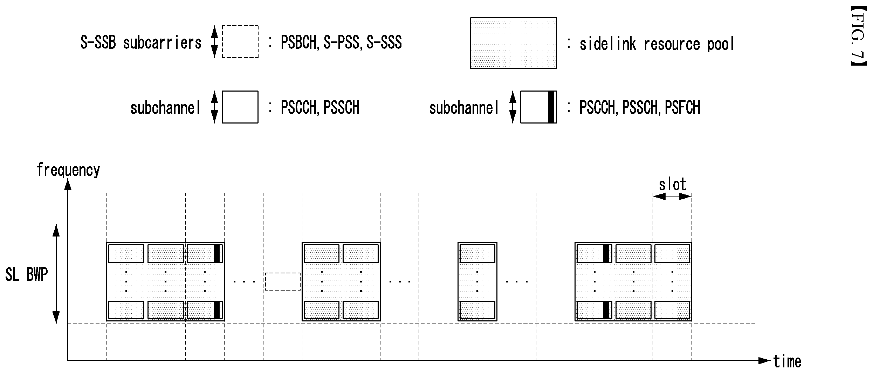

FIG. 7 is a conceptual diagram illustrating a first exemplary embodiment of configuration of a resource pool, SL signals, and SL channels within an SL bandwidth part (BWP).

Referring to FIG. 7, a resource pool may include one or more slots excluding slot(s) that do not meet configuration conditions of the resource pool and/or slot(s) not indicated by a bitmap among a plurality of slots. Non-consecutive slots in the time domain may be interpreted as consecutive within the resource pool. In other words, even when slots configured as the resource pool are not consecutive, indexes of the slots within the resource pool may be consecutive.

In the present disclosure, an SL resource (e.g., SL transmission resource) may refer to a resource within the resource pool. The SL resource may refer to a resource for transmission of an SL signal and/or SL channel. In the present disclosure, signal transmission may refer to transmission of an SL signal and/or SL channel, and signal reception may refer to reception of an SL signal and/or SL channel. 'Signal' may be interpreted as 'signal' or 'signal + channel', and 'channel' may be interpreted as 'channel' or 'channel + signal'. 'SL signal/channel' may be interpreted as 'SL signal', 'SL channel', or 'SL signal + SL channel'.

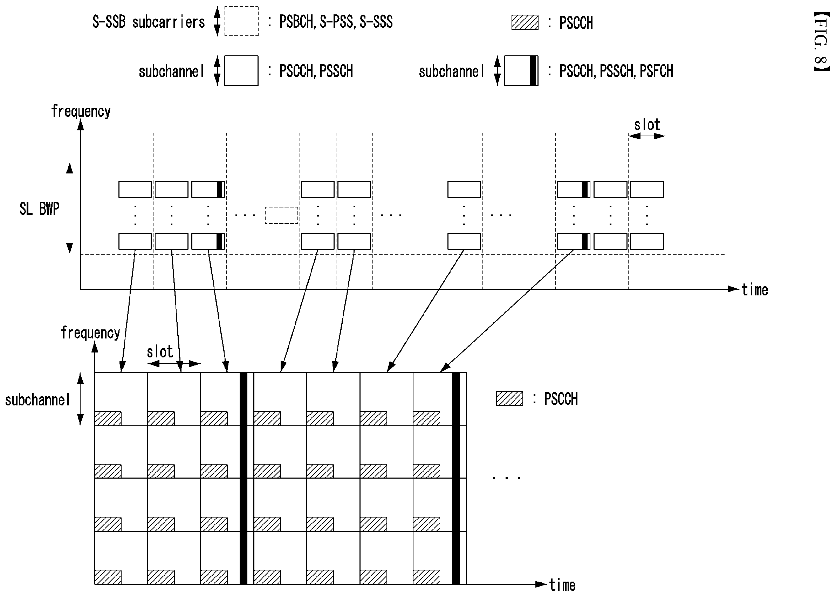

FIG. 8 is a conceptual diagram illustrating a first exemplary embodiment of SL resources.

Referring to FIG. 8, a basic transmission unit of an SL signal/channel in the time domain may be one slot, and a basic transmission unit of an SL signal/channel in the frequency domain may be one subchannel. A transmission resource of an SL signal/channel may include one or more slots and/or one or more subchannels. The transmission resource may include a PSCCH and/or a PSSCH. In addition, the transmission resource may include a PSFCH. A slot (e.g., location of the slot) including a PSFCH may be predefined. The slot including a PSFCH may be referred to as a PSFCH slot. A configuration condition of a PSFCH slot in a licensed band may be different from a configuration condition of a PSFCH slot in an unlicensed band. A transmission operation of a HARQ feedback in a PSFCH slot of a licensed band may be different from a transmission operation of a HARQ feedback in a PSFCH slot of an unlicensed band. Configuration information of an SL channel actually transmitted in a transmission resource may be transmitted through signaling (e.g., RRC message, SCI). The configuration information of the SL channel may include frequency resource information (e.g., location of a frequency resource region), time resource information (e.g., location of a time resource region), and the like.

SL resources may be allocated based on a mode 1 or mode 2. The mode 1 may be referred to as a resource allocation (RA)-mode 1, and the mode 2 may be referred to as an RA-mode 2. When the RA-mode 1 is used, a base station may transmit a DCI (e.g., SL grant) including SL resource allocation information to a terminal, and the terminal may perform SL communication using the SL resources allocated by the base station. When the RA-mode 2 is used, the terminal may perform a resource sensing operation within the resource pool, perform a resource selection operation for resources sensed by the resource sensing operation, and perform SL communication using resources selected by the resource selection operation.

In the RA-mode 1, when transmission data occurs, the terminal may transmit a scheduling request (SR) for the transmission data to the base station, and the base station may allocation resources (e.g., SL resources) to the terminal based on the SR by using a dynamic grant (DG). In the RA-mode 1, the base station may allocate periodic resources to the terminal in a semi-static scheme, and the terminal may perform SL communication using the periodic resources allocated by the base station.

The periodic resources allocated in the semi-static scheme may be configured grant (CG) resources. The base station may transmit allocation information of CG resources to the terminal. The allocation information of the CG resources may include at least one of location information of the CG resources, time resource information of the CG resources, frequency resource information of the CG resources, or periodicity information of the CG resources. According to a release procedure or deactivation procedure of CG resources, a CG scheme may be classified into CG-Type 1 and CG-Type 2. In the CG-Type 1, CG resources may be released by RRC signaling. In the CG-Type 2, CG resources may be deactivated by DCI signaling.

In the RA-mode 2, the terminal may perform a resource sensing operation during a sensing window, select resource(s) that satisfy predefined conditions among resources sensed by the resource sensing operation, and transmit an SL signal/channel using the selected resource(s). The resource sensing/selection methods according to the RA-mode 2 may be classified into a dynamic scheme and a semi-static scheme. According to the semi-static scheme, specific time resources may be occupied. The dynamic scheme and the semi-static scheme may be distinguished depending on a time of selecting new resources. When the dynamic scheme is used, the terminal may select resources for TB transmission every time it wants to transmit a new TB. The TB transmission may include 'new TB transmission (e.g., initial TB transmission)' and/or 'TB retransmission'. One or more resources (e.g., one or more transmission resources) may be used, occupied, and/or reserved for TB transmission.

When the semi-static scheme is used, a counter value of TB transmission may be 0 during a specific time (e.g., resource reservation interval (RRI)). Alternatively, when the semi-static scheme is used, a new transmission resource may be selected under a specific condition. The counter value of TB transmission may be selected randomly. The selected counter value may be decreased by 1 when one TB transmission (e.g., new TB transmission and/or TB retransmission) is completed. When the semi-static scheme is used, the terminal may continue to occupy the selected resource during a specific time. In other words, the terminal may continue to use the selected resource during the specific time. The specific time may mean a time that the terminal can exclusively occupy. The specific time may be defined as RRI.

The base station may signal an RRI list to the terminal. The RRI list may include up to 16 RRIs (e.g., up to 16 RRI values). The signaling may be at least one of system information (SI) signaling, RRC signaling, MAC CE signaling, or PHY signaling. The terminal may receive the RRI list from the base station, select one RRI among RRIs belonging to the RRI list, and use a selected resource (e.g., selected transmission resource) during the selected RRI. The terminal may occupy consecutive resources during the RRI. The consecutive resources may be configured in a logical resource region for SL.

A first terminal may transmit an SCI including information of the selected RRI to a second terminal. The second terminal may receive the SCI from the first terminal and identify the RRI selected by the first terminal based on an information element included in the SCI. The second terminal may not select a resource (e.g., resource selected by the first terminal) during the RRI indicated by the SCI. The information on the resource selected by the first terminal may be included in the SCI.

When the RA-mode 2 is used, a resource sensing window and/or a resource selection window may be configured. The resource sensing window may be referred to as a sensing window (SSW), and a resource sensing operation may be performed within the SSW. The resource selection window may be referred to as a selection window (SLW), and a resource selection operation may be performed within the SLW. Resources used during the RRI (e.g., RRI value) indicated by the SCI may be identified by the resource sensing operation performed in the SSW.

The sidelink control information (SCI) may include scheduling information (e.g., scheduling information of a TB) and/or parameter(s) applicable to TB transmission. The parameter(s) applied to TB transmission may be used for demodulation/decoding of the TB at a receiving terminal. The SCI may be classified into a first-stage SCI (1^{st} SCI) and a second-state SCI (2^{nd} SCI). The first-stage SCI may be transmitted on a PSCCH, and the second-stage SCI may be transmitted on a PSSCH. The second-stage SCI may be associated with the first-stage SCI. The first-stage SCI may include scheduling information for initial TB transmission and/or scheduling information for TB retransmission. The second-stage SCI may include at least one of information on a PSSCH transmitting terminal, information on a PSSCH receiving terminal, HARQ feedback information, or retransmission information.

Y transmission resources including a slot in which the first-stage SCI is transmitted may be configured. Y may be a natural number. For example, Y may be 2 or 3. The first transmission resource among the Y transmission resources may be configured in the slot in which the first-stage SCI is transmitted. In other words, the first transmission resource among the Y transmission resources may be the slot in which the first-stage SCI is transmitted. The slot(s) in which (Y-1) transmission resources are configured may be defined by slot offset(s). The slot offset may be a positive integer. The maximum value of the slot offset may be 32.

The scheduled first transmission resource may include N_{subchannel} subchannels in the frequency domain. The first subchannel (e.g., start subchannel) among N_{subchannel} subchannels may be a subchannel through which the first-stage SCI is transmitted. N_{subchannel} may be a natural number. N_{subchannel} may be set to be equal to or less than the maximum number of subchannels configured by higher layer signaling. The first-stage SCI may include frequency resource information of the second transmission resource (e.g., information of N subchannel(s), information of a start subchannel among the N subchannel(s)) and/or frequency resource information of the third transmission resource (e.g., information of N subchannel(s), information on a start subchannel among the N subchannel(s)). The number N of subchannels of the second transmission resource may be the same as the number N_{subchannel} of subchannels of the first transmission resource. The number N of subchannels of the third transmission resource may be the same as the number N_{subchannel} of subchannels of the first transmission resource. The first transmission resource among the Y transmission resources may be a transmission resource for the first TB transmission (e.g., initial TB transmission). The remaining (Y-1) transmission resource(s) may be transmission resource(s) for TB retransmission.

The first-stage SCI may include one or more information elements defined in Table 1 below.

**[Table 1]**

| **Information elements** |
|---|
| Priority: Priority of data or information transmitted on a PSSCH |
| Frequency resource assignment: information on subchannels of one or two additional transmission resources |
| Time resource assignment: information on slot offset(s) of one or two additional transmission resources other than the first-stage SCI |
| Resource reservation period: time period in which the same resource is used |
| PSFCH overhead indicator: information indicating whether to transmit a PSFCH. |
| A receiving terminal may perform an operation of determining a TB size (TBS) and/or an operation of identifying resource elements (REs) used for PSSCH transmission based on the PSFCH overhead indicator. |
| Second-stage SCI format: SCI format 2-A, SCI format 2-B, SCI format 2-C |
| DMRS pattern |
| Beta offset indicator |
| DMRS port number |
| MCS |
| Additional MCS table indicator |
| Collision information receiver flag |
| Other information element(s) |

The second-stage 2 SCI may include one or more information elements. The information elements included in the second-stage SCI may vary depending on a format of the second-stage SCI. The second-stage SCI may include one or more information elements defined in Table 2 below.

**[Table 2]**

| **Information elements** |
|---|
| HARQ process number |
| New data indicator (NDI) |
| Redundancy version (RV) |
| Source ID |
| Destination ID |
| HARQ feedback enable/disable indicator |
| Cast type indicator |
| Other information element(s) |

A PSFCH may be configured periodically within an SL resource region. A slot in which a PSFCH is configured may be referred to as a PSFCH slot. The PSFCH slot may be configured according to a periodicity. The periodicity of the PSFCH slot may be referred to as a PSFCH transmission occasion resource (TPR). The PSFCH TPR may be defined on a slot basis within a resource pool. The PSFCH TPR may be 1 slot, 2 slots, or 4 slots. PRB(s) in which the PSFCH can be transmitted in the frequency domain may be indicated by a bitmap. The PRBs available for PSFCH transmission may be all PRBs or some PRBs. One PSFCH may be transmitted in one PRB. Alternatively, in an unlicensed band, one PSFCH may be transmitted in one or more PRBs.

The PRB(s) in which the PSFCH is transmitted may be determined based on a location of a slot in which a PSSCH associated with the PSFCH is received. A difference (e.g., slot offset, interval) between the slot in which the PSSCH is received and the slot in which the PSFCH is to be transmitted may be considered. For example, the PSFCH may be transmitted in a PSFCH slot occurring first after K slot(s) from a slot n in which the PSSCH is received. A PRB index (e.g., index of the PRB in which the PSFCH is transmitted) may be defined based on a function f(P_{PSFCH}, n, K, k_{subch}). The P_{PSFCH} may be a periodicity of the PSFCH. n may be the index of the slot in which the PSSCH is received. K may be a slot offset used to determine the PSFCH slot in which the PSFCH is transmitted. k_{subch} may be the index of the subchannel in which the PSCCH is configured.

In the function f(.) for determining the PRB index, at least one of a different code q, an identifier (ID) of the transmitting terminal, or an ID of the receiving terminal transmitting the PSFCH may be considered. The code q may be defined by a cyclic shift or a cyclic shift pair. The cyclic shifts may be related to different Zadoff-Chu sequences. The cyclic shift pair may refer to a pair of different sequences according to acknowledgment (ACK) or negative ACK (NACK).

A set of PRBs in which the PSFCH is transmitted may be determined based on a slot #n in which the PSSCH is transmitted and/or an index of a subchannel in which the PSSCH is transmitted. A code conveyed by the PSFCH and a PRB in the PRB set may be determined based on a function that considers at least one of the ID of the transmitting terminal or the ID of the receiving terminal transmitting the PSFCH.

The base station may transmit configuration information (e.g., transmission resource information) of SL channel(s) to the terminal. The terminal may receive the configuration information of SL channel(s) from the base station, and transmit SL channel(s) based on the configuration information (e.g., transmission resources indicated by the configuration information). Alternatively, the terminal may select resource(s) by performing a resource sensing operation and/or a resource selection operation, and may transmit SL channel(s) in the selected resource(s). The selected resource(s) may mean transmission resource(s). The transmission resource may include one or more subchannels and one or more slots.

The transmitting terminal may transmit an SCI including transmission resource information (e.g., scheduling information) of a PSSCH to the receiving terminal. The transmission resource information may be allocation information of subchannel(s) and/or slot(s) of the PSSCH. The transmitting terminal may refer to a terminal that transmits a PSSCH (e.g., data). The receiving terminal may refer to a terminal that receives the PSSCH (e.g., data). The transmission resource information included in the SCI may indicate a transmission resource of the PSSCH in a slot in which the SCI is transmitted. Alternatively, the transmission resource information included in the SCI may indicate a transmission resource of the PSSCH in a slot other than the slot in which the SCI is transmitted.

In SL-U communication, a listen-before-talk (LBT) operation may be performed for coexistence with other communication nodes (e.g., communication devices). Actual transmission resources may be determined based on a result of the LBT operation. The terminal may perform an LBT operation, and when the LBT operation succeeds, the terminal may use a channel for a specific time (e.g., channel occupancy time (COT)). For example, when the LBT operation of the terminal succeeds, a COT may be initiated by the terminal, and the terminal may perform communication (e.g., SL-U communication) during the COT. Depending on a specific condition, other terminals (e.g., terminals that have not initiated the COT) may perform communication (e.g., SL-U communication) during the COT. In other words, the COT may be shared with other terminal(s), and in this case, the other terminal(s) may perform communication within the shared COT.

A transmission unit (e.g., symbol configuration) within the COT may vary. Configuration information of a transmission unit within the COT may be transmitted through signaling (e.g., SCI). The symbol may refer to an OFDM symbol. In the exemplary embodiment of FIG. 8, a PSCCH and a PSSCH may be configured together within a transmission resource. The PSCCH may be configured starting from a PRB with the lowest index in a subchannel with the lowest index among subchannel(s) configured for PSSCH transmission.

Operations, procedures, control information, and/or configuration information for operating channel occupancy in SL-U communication will be described. An operating channel may refer to a frequency resource having a bandwidth of a predefined size. Resources (e.g., time resources, frequency resources, carriers, subcarriers, subchannels) of an unlicensed band may be occupied by a communication node belonging to a network (e.g., wireless local area network (WLAN)) other than a cellular network (e.g., 4G network, 5G network). Resources in an unlicensed band may be occupied by signals/channels transmitted and received between the base station and the terminal belonging to the cellular network. Resources in an unlicensed band may be occupied by signals/channels transmitted and received between terminals belonging to the cellular network.

In the present disclosure, a communication node (e.g., base station, terminal) transmitting a signal/channel may be expressed as a transmitting node, and a communication node (e.g., base station, terminal) receiving a signal/channel may be expressed as a receiving node. In an unlicensed band, communication nodes may share an operating channel. The LBT operation may be performed to minimize interference between communication nodes. The LBT operation may include an operation of identifying whether an operating channel is occupied by another signal before transmitting a signal/channel. When the LBT operation is supported, a communication node (e.g., transmitting node) may perform a random backoff procedure.

When the LBT operation succeeds, the communication node may occupy the operating channel. The occupancy of the operating channel may be referred to as channel occupancy (CO). The terminal may secure a CO by performing an LBT operation. Configuration of the CO may vary depending on a type of LBT operation performed by the terminal. For example, the maximum length of CO may vary depending on the type of LBT operation performed by the terminal. The type of LBT operation performed by the terminal may vary depending on a priority class of data to be transmitted by the terminal within the CO. The priority class may be a channel access priority class (CAPC).

The terminal may perform the LBT operation using different parameters (e.g., different LBT parameters) to obtain a CO corresponding to each priority class. When the LBT operation is performed according to the priority class, the parameters that determine an execution time of the LBT operation may vary. In the LBT operation involving a random backoff procedure, the minimum and/or maximum size of a contention window (CW) may be set differently for each priority class. The terminal may select a random backoff counter within the CW and perform a random backoff procedure based on the selected random backoff counter.

A fixed time period in which the LBT operation is performed may be determined based on the type of LBT operation and/or LBT parameter(s). The length of the fixed time period may be 16 µs or 25 µs. The communication node (e.g., transmitting node) that performed the LBT operation may transmit information on a CO (e.g., CO configuration information) obtained by the LBT operation to another communication node (e.g., receiving node). The CO configuration information may include LBT parameter(s) used for the LBT operation of the terminal. The LBT parameter(s) may include information of the priority class. The CO configuration information may include at least one of information of a start time of the CO, information of the length of the CO, or information of an end time of the CO. In the present disclosure, 'time point' may be interpreted as 'time'.

The receiving node may receive the CO configuration information from the transmitting node, and identify the LBT parameter(s) used for obtaining the CO based on the CO configuration information. The receiving node may identify the priority class for the CO initiated by the transmitting node based on the LBT parameter(s). The receiving node may identify the CO initiated by the transmitting node based on the CO configuration information, and perform communication within the CO. For example, the receiving node may transmit and receive signals/channels within the CO.

The transmitting node may configure a channel occupancy time (COT). The configuration of the COT mean initiation of the COT. The COT may be configured within a time resource and/or a frequency resource. The COT may be configured within one or more resource blocks (RBs) or one or more RB sets. Configuration information of the COT (i.e., COT configuration information) may indicate a time resource and/or a frequency resource in which the COT is configured. The frequency resource of the COT may include one or more RBs or one or more RB sets. The COT may be referred to as a CO or channel occupancy resource (COR) In an unlicensed band, resources may be shared by multiple communication nodes. A communication node may use non-consecutive resources (e.g., non-consecutive time resources and/or non-consecutive frequency resources). In this case, signal/channel transmission in an unlicensed band may be performed in a discontinuous burst scheme. The burst scheme may refer to transmission performed in a transmission resource including one or more slots.

A signal/channel may be transmitted in a time with a length shorter than a slot. The time with a length shorter than a slot may include consecutive symbols. The time with a length shorter than a slot may be a mini-slot. Consecutive transmission resources may be configured within a COT. The transmitting node may transmit an initial signal and/or a burst signal (e.g., PSSCH, PSFCH, PSCCH, reference signal) within the COT. The initial signal may be a signal obtained by duplicating a signal of the first symbol in which SL transmission is performed. Alternatively, the initial signal may be a signal composed of a cyclic prefix (CP).

In SL-U communication, the terminal may perform an LBT operation before transmitting a signal/channel. If a result of the LBT operation indicates an idle state, the terminal may transmit a signal/channel. If the result of the LBT operation indicates a busy state, the terminal may not transmit a signal/channel. "The result of the LBT operation indicates the idle state" may mean "the LBT operation succeeds". "The result of the LBT operation indicates the busy state" may mean "the LBT operation fails". Based on a result of comparison between an energy detection level and a predefined threshold, the result of the LBT operation may be determined as indicating the idle state or busy state.

The LBT operation may be classified into a type 1 LBT operation and a type 2 LBT operation. In the type 1 LBT operation, a channel sensing time may be variable. In other words, the type 1 LBT operation may be performed in a variable time period. The channel sensing time may be changed by a random variable. The type 1 LBT operation may refer to an LBT operation involving a random backoff procedure. In the type 2 LBT operation, a channel sensing time may be fixed. In other words, the type 2 LBT operation may be performed in a fixed time period. The channel sensing time may be m µs. m may be a natural number.

When the type 1 LBT operation is performed, the terminal may randomly select a value N according to a uniform probability within the CW. The value N may be an integer. The value N may be a random backoff counter. The terminal may perform a channel sensing operation in a predefined sensing period (e.g., sensing slot period). The channel sensing operation may mean an energy detection operation for time and/or frequency resource(s). If a result of the channel sensing operation in one sensing period indicates an idle state, the terminal may decrease the value N selected within the CW by 1. If the result of the channel sensing operation in one sensing period indicates a busy state, the terminal may additionally perform the channel sensing operation. If the result of the channel sensing operation in N sensing periods indicates an idle state, the terminal may transmit a signal/channel.

The terminal may perform a channel access procedure to use an unlicensed band. The channel access procedure may be an LBT operation. The terminal may obtain a COT by performing the channel access procedure. In other words, when the terminal's channel access procedure succeeds, the terminal may initiate a COT. In the present disclosure, "the terminal obtains a COT" may mean "the terminal initiates the COT" and/or "the terminal configures the COT". The terminal may perform an LBT operation (e.g., type 1 LBT operation) to obtain the COT. The terminal may obtain the COT when the type 1 LBT operation succeeds. The terminal may obtain the COT by performing a semi-static channel access procedure.

An LBT operation (e.g., type of LBT operation) performed by the terminal for signal/channel transmission within the COT may be different from an LBT operation (e.g., type of LBT operation) performed by the terminal for signal/channel transmission outside of the COT. The terminal may perform a type 2 LBT operation for signal/channel transmission within the COT. The type 2 LBT operation may be performed in a fixed time period. The terminal may perform a type 1 LBT operation for signal/channel transmission outside of the COT. The type 1 LBT operation may be performed in a variable time period.

The terminal may share the obtained COT or initiated COT with other terminals. The operation may be a COT sharing operation. In the present disclosure, the terminal sharing the obtained COT or initiated COT with another terminal may be referred to as 'terminal A', and a terminal sharing the COT obtained or initiated by another terminal may be referred to as 'terminal B'. In addition, the terminal A may be referred to as a first terminal or a second terminal, and the terminal B may be referred to as a second terminal or a first terminal.

The terminal A may perform an LBT operation using different LBT parameters depending on a priority class of data. The LBT parameters (e.g., contention window, length of a sensing period (e.g., sensing window)) used for the LBT operation may vary depending on the priority class. The priority class may be selected by the terminal A. The maximum length of COT may vary depending on a result of the LBT operation according to the priority class. The priority class may refer to a channel access priority class (CAPC).

The terminal A may obtain a COT according to the result of the LBT operation. If the LBT operation is successful, the terminal A may obtain a COT. If the LBT operation fails, the terminal A may not be able to obtain a COT. The terminal A may perform signal/channel transmission within the COT. The transmission of the terminal A within the COT may be SL transmission or UL transmission. The terminal A may transmit information on the obtained COT (e.g., COT configuration information, COT sharing information) to the terminal B. The COT configuration information and the COT sharing information may be the same information. The COT configuration information may be CO configuration information, and the COT sharing information may be CO sharing information. The terminal B may receive information on the COT initiated by the terminal A from the terminal A, and transmit a signal/channel within the COT initiated by the terminal A.

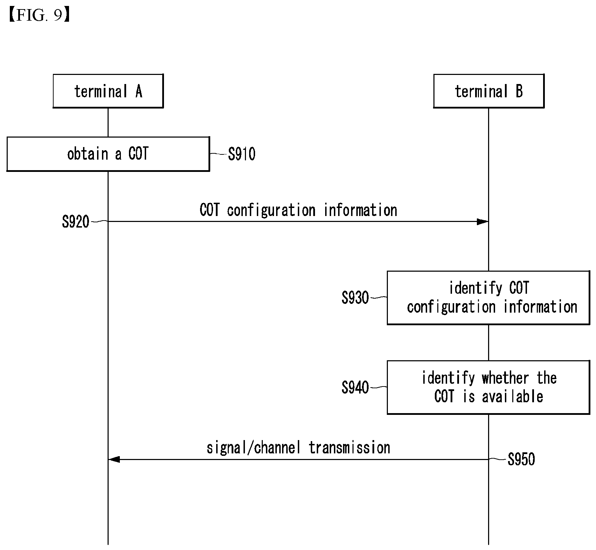

FIG. 9 is a sequence chart illustrating a first exemplary embodiment of a communication method in an unlicensed band.

Referring to FIG. 9, the terminal A may obtain a COT (S910). For example, the terminal A may obtain the COT by performing an LBT operation (e.g., type 1 LBT operation). The terminal A may transmit information on the obtained COT (e.g., COT configuration information, COT sharing information) to the terminal B (S920). The COT configuration information (e.g., COT sharing information) may be transmitted through a MAC CE and/or SCI. In other words, the terminal A may transmit a MAC CE including the COT configuration information to the terminal B. The MAC CE may be transmitted on a PSSCH scheduled by SCI. Alternatively, the terminal A may transmit an SCI including the COT configuration information to the terminal B. The COT configuration information may include one or more information elements defined in Table 3 below.

**[Table 3]**

| **Information elements** |
|---|
| Source identifier (ID) |
| Destination ID |
| CAPC (e.g., priority class) |
| Remaining CO duration |
| Frequency domain information of CO |
| Additional ID (e.g., additional source ID and/or additional destination ID) |
| Additional time domain information of CO |
| Additional frequency domain information of CO |
| Sharing indicator |
| Sharing offset |
| Sharing target information |

A source ID may be a source ID (e.g., ID or address of the terminal A) for transmission of the terminal A within the COT. A destination ID may be a destination ID (e.g., ID of a specific terminal (e.g., ID or address of the terminal B), groupcast ID, broadcast ID) for transmission of the terminal A within the COT. The groupcast ID may be a groupcast address, and the broadcast ID may be a broadcast address.

A CAPC may be a CAPC for transmission of the terminal A within the COT. Frequency domain information may be frequency resource information (e.g., frequency resource allocation), and time domain information may be time resource information (e.g., time resource allocation). A sharing indicator (e.g., COT sharing indicator, CO sharing indicator) may indicate whether to share the COT initiated by the terminal A. A sharing offset may be an offset from a transmission time (e.g., reception time) of the COT configuration information to a start time when the shared COT is available. The sharing offset may be set in units of slots.

The terminal B may receive the COT configuration information from the terminal A. The terminal B may identify the information element(s) included in the COT configuration information (S930). The terminal B may identify the COT initiated by the terminal A based on the COT configuration information. The terminal B may identify whether the COT is available (S940). If the COT initiated by the terminal A is available, the terminal B may transmit a signal/channel within the COT (S950). When the terminal A indicates COT sharing and/or when communication of the terminal B is possible within a remaining CO duration (e.g., remaining COT duration), the terminal B may determine that the COT initiated by the terminal A is available.

The remaining CO duration may indicate a period from a time at which the terminal A transmits the COT configuration information including information on the remaining CO duration to an end time of the COT (e.g., COT associated with the COT configuration information). The remaining CO duration may be indicated in units of slots. For example, when the COT configuration information is transmitted in a slot #N-M, and the COT associated with the COT configuration information ends in a slot #N, the terminal A may inform the terminal B of the remaining CO duration corresponding to M slots. Alternatively, the terminal A may inform the terminal B of the remaining CO duration corresponding to at least one of M-1, M, or M+1 slots. The terminal B may receive information on the remaining CO duration from the terminal A and may identify the end time of the COT based on the remaining CO duration. The terminal B may identify a period from a reception time of the COT setting information including the CO duration information to the end time of the COT associated with the COT configuration information, based on the remaining CO duration. The terminal B may identify the length of the remaining period within the COT initiated by the terminal A based on the remaining CO duration.

If a period required for signal/channel transmission of the terminal B belongs to the remaining CO duration (e.g., the remaining period within the COT), the terminal B may transmit a signal/channel within the COT shared by the terminal A. If the period required for signal/channel transmission of the terminal B is longer than the remaining CO duration (e.g., the remaining period within the COT), the terminal B may not transmit a signal/channel within the COT shared by the terminal A. In this case, the terminal B may obtain a separate COT and transmit the signal/channel within the obtained COT.

The COT configuration information transmitted by the terminal A may include information on a sharing offset. The sharing offset may be an offset from the transmission time (e.g., reception time) of the COT configuration information to a start time when the shared COT is available. The sharing offset may be set in units of slots. The terminal B may receive the COT configuration information from the terminal A, and identify the sharing offset included in the COT configuration information. The terminal B may identify the start time when the COT shared by the terminal A is available based on the sharing offset. The terminal B may identify an available period of the shared COT based on the start time when the shared COT is available.

If the period required for signal/channel transmission of the terminal B belongs to the available period of the shared COT, the terminal B may transmit a signal/channel within the COT shared by the terminal A. If the period required for signal/channel transmission of the terminal B is longer than the available period of the shared COT, the terminal B may not transmit a signal/channel within the COT shared by the terminal A. In this case, the terminal B may obtain a separate COT and transmit the signal/channel within the obtained COT.

The COT configuration information transmitted by the terminal A may include frequency domain information (e.g., frequency domain information of the COT). The frequency domain information of the COT may indicate a frequency resource (e.g., frequency region) in which a signal/channel of the terminal A is transmitted. The COT configuration information including the frequency domain information may be transmitted through a frequency resource in which a signal/channel of the terminal A is transmitted. The terminal B may receive the COT configuration information from the terminal A and identify the frequency domain information included in the COT configuration information. The terminal B may identify the frequency resource of the COT shared by the terminal A based on the frequency domain information.

If a frequency resource required for signal/channel transmission of the terminal B belongs to the frequency resource of the shared COT, the terminal B may transmit a signal/channel within the COT shared by the terminal A. If the frequency resource required for signal/channel transmission of the terminal B is greater than the frequency resource of the shared COT, the terminal B may not transmit a signal/channel within the COT shared by the terminal A. In this case, the terminal B may obtain a separate COT, and transmit the signal/channel within the obtained COT.

The COT configuration information transmitted by the terminal A may include information on a priority class (e.g., CAPC). The information on the priority class may be an index indicating the priority class. The terminal B may receive the COT configuration information from the terminal A and identify the information on the priority class included in the COT configuration information. The terminal B may identify the priority class of the COT (e.g., COT shared by the terminal A) based on the information on the priority class. The priority class of the COT may be a CAPC for the COT. The terminal B may identify a priority class of data that can be transmitted within the COT based on the priority class of the COT.

When a priority class of a signal/channel (e.g., data) of the terminal B is the same as the priority class indicated by the COT configuration information, or when a priority class of a signal/channel (e.g., data) of the terminal B is higher than the priority class indicated by the COT configuration information, the terminal B may transmit the signal/channel within the COT shared by the terminal A. Alternatively, when a priority class of a signal/channel (e.g., data) of the terminal B is the same as the priority class indicated by the COT configuration information or when a priority class of a signal/channel (e.g., data) of the terminal B is lower than the priority class indicated by the COT configuration information, the terminal B may transmit the signal/channel within the COT shared by the terminal A.

When a priority class of a signal/channel (e.g., data) to be transmitted by the terminal B meets a condition of the priority class of the COT (e.g., COT shared by the terminal A), the terminal B may transmit the signal/channel within the COT. When a priority class of a signal/channel (e.g., data) to be transmitted by the terminal B does not meet a condition of the priority class of the COT (e.g., COT shared by the terminal A), the terminal B may not transmit the signal/channel within the COT. In this case, the terminal B may obtain a separate COT, and transmit the signal/channel within the obtained COT.

The COT configuration information transmitted by the terminal A may include information on a sharing target. The information on the sharing target may indicate a target (e.g., terminal) with which the COT is shared. The information on the sharing target may include information on a location of a terminal capable of sharing the COT. For example, the information on the sharing target may include information on a location of the terminal A. Terminal(s) located around the terminal A may share the COT initiated by the terminal A. The information on the sharing target may include information on a communication distance requirement of the terminal A. The information on the communication distance requirement may indicate a coverage of the terminal A. The information on the sharing target may include at least one of the information on the location of the terminal A or the information on the communication distance requirement of the terminal A.

The terminal B may receive the COT configuration information from the terminal A, and identify the information on the sharing target included in the COT configuration information. The terminal B may identify the coverage of the terminal A based on the information on the sharing target. If the terminal B is located within the coverage of the terminal A, the terminal B may transmit a signal/channel within the COT shared by the terminal A. In other words, the COT initiated by the terminal A may be shared with the terminal B. If the terminal B is not located within the coverage of the terminal A, the terminal B may not be able to transmit a signal/channel within the COT shared by the terminal A. In other words, the COT initiated by the terminal A may not be shared with the terminal B.

The COT initiated by the terminal A may be shared with the terminal B, and the terminal B may perform communication using the COT. The terminal B may transmit a signal/channel to the terminal A within the COT shared by the terminal A. In other words, a destination of the signal/channel transmitted by the terminal B within the COT shared by the terminal A may include the terminal A. The terminal B may not be able to transmit a signal/channel to a terminal other than the terminal A within the COT shared by the terminal A. In other words, within the COT shared by the terminal A, signal/channel transmission to a destination other than a destination including the terminal A may not be performed.

The information on the sharing target included in the COT configuration information may include information on terminal(s) that can share the COT initiated by the terminal A. The information on the terminal(s) that can share the COT initiated by the terminal A may include at least one of a source ID or a destination ID associated with transmission of the terminal A. A source ID may be an ID or address associated with a terminal transmitting a signal/channel. A destination ID may be an ID or address associated with a terminal receiving a signal/channel. When the terminal A transmits a signal/channel to the terminal B, a source ID may indicate the terminal A, and a destination ID may indicate the terminal B.

The terminal A may transmit information on the sharing target (e.g., source ID and/or destination ID) to the terminal B. Interpretation of the source ID and/or destination ID may vary depending on a transmission scheme (e.g., unicast transmission, groupcast transmission, broadcast transmission) of the terminal A. The terminals that can share the COT initiated by the terminal A may vary depending on the source ID and/or destination ID.

When unicast SL communication is performed between the terminal A and the terminal B, the source ID may be the ID of the terminal A, and the destination ID may be the ID of the terminal B. The terminal B, which has the same ID as the destination ID indicated by the information on the sharing target, may transmit a signal/channel within the COT shared by the terminal A, which has the source ID indicated by the information on the sharing target. When the COT initiated by the terminal A is shared with the terminal B, a source ID of SL transmission of the terminal B within the shared COT is the ID of the terminal B, and a destination ID of SL transmission of the terminal B within the shared COT is the ID of the terminal A, the terminal B may transmit a signal/channel within the shared COT.

When groupcast SL communication or broadcast SL communication is performed between the terminal A and the terminal B, the source ID may be the ID of the terminal A. In the groupcast SL communication, the destination ID may be an ID or address of a group receiving the groupcast SL transmission. In the broadcast SL communication, the destination ID may be an ID or address of a group receiving the broadcast SL transmission. When the terminal B receives groupcast SL transmission from the terminal A within the COT initiated by the terminal A, and the COT is shared with the terminal B, the terminal B may perform groupcast SL transmission with the same destination ID as the groupcast SL transmission of the terminal A or perform groupcast SL transmission for a group including the terminal A, within the COT shared by the terminal A. When the terminal A shares the COT for groupcast SL transmission with the terminal B, the terminal B may perform groupcast SL transmission with the same destination ID as the groupcast SL transmission or perform groupcast SL transmission for a group including the terminal A, within the COT shared by the terminal A.

When the terminal B receives broadcast SL transmission from the terminal A within the COT initiated by the terminal A, and the COT is shared with the terminal B, the terminal B may perform broadcast SL transmission with the same destination ID as the broadcast SL transmission of the terminal A or perform broadcast SL transmission for a group including the terminal A, within the COT shared by the terminal A. When the terminal A shares the COT for broadcast SL transmission with the terminal B, the terminal B may perform broadcast SL transmission with the same destination ID as the broadcast SL transmission, or perform broadcast SL transmission for a group including the terminal A, within the COT shared by the terminal A.

The terminal A may transmit COT configuration information including information on the sharing target to the terminal B. The information on the sharing target may include an additional ID. The additional ID may be different from a destination ID for SL transmission of the terminal A. A terminal C, which has the same ID as the additional ID, may transmit a signal/channel within the COT shared by the terminal A. If a source ID for SL transmission of the terminal C is the same as the additional ID indicated by the terminal A, the terminal C may perform the SL transmission within the COT shared by the terminal A. The terminal C may be the same as or different from the terminal B. When a source ID for SL transmission of the terminal C is the same as the additional ID indicated by the terminal A, and a destination ID for the SL transmission of the terminal C is the same as the source ID indicated by the terminal A, the terminal C may transmit a signal/channels within the COT shared by the terminal A.

The COT configuration information may include a source ID and/or destination ID associated with transmission of the terminal A. A source ID may be an ID associated with a terminal transmitting a signal/channel. A destination ID may be an ID associated with a terminal receiving a signal/channel. When the terminal A transmits a signal/channel to the terminal B, the source ID may indicate the terminal A, and the destination ID may indicate the terminal B.

The COT configuration information (e.g., COT sharing information) transmitted by the terminal A may include information on a location of the terminal A. For example, the COT configuration information may include information on a communication distance requirement of the terminal A. The terminal A may transmit information on a coverage of the terminal A. The information on the coverage of the terminal A may be included in the COT configuration information. The terminal B may receive, from the terminal A, at least one of information on the location of the terminal A, information on the communication distance requirement of the terminal, or information on the coverage of the terminal A. The terminal B may determine whether the terminal B is within the coverage of the terminal A based on the location of the terminal B and the coverage of the terminal A.

When the terminal B is located within the coverage of the terminal A, the terminal B may transmit a signal/channel within the COT shared by the terminal A. In other words, the COT initiated by the terminal A may be shared with the terminal B. When the terminal B is not located within the coverage of the terminal A, the terminal B may not be able to transmit a signal/channel within the COT shared by the terminal A. In other words, the COT initiated by the terminal A may not be shared with the terminal B.

The COT initiated by the terminal A may be shared with the terminal B, and the terminal B may perform communication using the COT. The terminal B may transmit a signal/channel to the terminal A within the COT shared by the terminal A. In other words, a destination of the signal/channel transmitted by the terminal B within the COT shared by the terminal A may include the terminal A. The terminal B may not be able to transmit a signal/channel to a terminal other than the terminal A within the COT shared by the terminal A. In other words, within the COT shared by the terminal A, signal/channel transmission to a destination other than a destination including the terminal A may not be performed.

A destination ID for transmission of the terminal B within the COT shared by the terminal A may include the ID of the terminal A. A group corresponding to a destination ID of groupcast SL transmission (or multicast SL transmission) of the terminal B within the COT shared by the terminal A may include the terminal A.

The terminal A may transmit COT configuration information (e.g., COT sharing information) using SCI. The terminal A may transmit a first-stage SCI including the COT configuration information. The COT configuration information included in the first-stage SCI may include time domain information and/or frequency domain information of the COT. The time domain information of the COT may indicate a period from a transmission time of the first-stage SCI to an end time of the COT. Alternatively, the time domain information of the COT may indicate a period from the transmission time of the first-stage SCI to a start time when the COT is available. The frequency domain information of the COT may indicate a frequency resource of the COT. The COT configuration information included in the first-stage SCI may include information on a priority class.

The terminal B may receive the SCI (e.g., first-stage SCI) from the terminal A and identify the COT configuration information (e.g., COT sharing information) included in the SCI. The terminal B may identify the time domain information and/or frequency domain information of the COT included in the COT configuration information. The terminal B may identify the information on the priority class included in the COT configuration information. When the first-stage SCI including the COT configuration information is received, the terminal B may determine that the COT associated with the COT configuration information is available. The terminal B may transmit a signal/channel within the COT associated with the COT configuration information.

The terminal A may transmit a second-stage SCI including the COT configuration information (e.g., COT sharing information). The COT configuration information may be included in at least one of the first-stage SCI or second-stage SCI. When the COT configuration information is transmitted through the first-stage SCI and the second-stage SCI, a part of the COT configuration information may be included in the first-stage SCI, and the remaining part of the COT configuration information may be included in the second-stage SCI.

The COT configuration information included in the first-stage SCI may include time domain information and/or frequency domain information of the COT. The time domain information of the COT may indicate a period from a transmission time of the first-stage SCI to an end time of the COT. Alternatively, the time domain information of the COT may indicate a period from the transmission time of the first-stage SCI to a start time when the COT is available. The frequency domain information of the COT may indicate a frequency resource of the COT. The COT configuration information included in the first-stage SCI may include information on a priority class.

The COT configuration information included in the second-stage SCI may include time domain information and/or frequency domain information of the COT. The time domain information of the COT may indicate a period from a transmission time of the second-stage SCI to an end time of the COT. Alternatively, the time domain information of the COT may indicate a period from the transmission time of the second-stage SCI to a start time when the COT is available. The frequency domain information of the COT may indicate a frequency resource of the COT. The COT configuration information included in the second-stage SCI may include information on a priority class.

The COT configuration information included in the second-stage SCI may include information on a sharing target. The information on the sharing target may include an ID of a terminal capable of using the COT (e.g., shared COT). The information on the sharing target may include information on a location of the terminal capable of using the COT (e.g., shared COT).

The terminal B may receive the second-stage SCI and identify the COT configuration information included in the second-stage SCI. The terminal B may identify the time domain information and/or frequency domain information of the COT included in the COT configuration information. The terminal B may identify information on the priority class included in the COT configuration information. When the second-stage SCI including the COT configuration information (e.g., COT sharing information) is received from the terminal A, the terminal B may determine that the COT associated with the COT configuration information is available. The COT associated with the COT configuration information may be the COT initiated by the terminal A.

The terminal B may transmit a signal/channel within the COT associated with the COT configuration information. The terminal B may receive the information on the sharing target from the terminal A and may identify whether the terminal B is included in the sharing target indicated by the information on the sharing target. If the terminal B is included in the sharing target indicated by the information on the sharing target, the terminal B may transmit a signal/channel within the shared COT. If the terminal B is not included in the sharing target indicated by the sharing target information, the terminal B may not be able to transmit a signal/channel within the shared COT.

The terminal A may transmit an SCI format 2-A including the COT configuration information (e.g., COT sharing information). In this case, a range of terminals sharing the COT initiated by the terminal A may vary depending on a cast type indicator included in the SCI format 2-A. The terminal B may receive the SCI format 2-A from the terminal A and may receive the COT configuration information included in the SCI format 2-A. In this case, the terminal B may identify whether the COT associated with the COT configuration information is available based on the cast type indicator included in the SCI format 2-A.

When the cast type indicator indicates unicast, the COT initiated by the terminal A may be shared with terminal(s) performing unicast SL transmission. When the terminal A performs unicast SL transmission for the terminal B based on the SCI format 2-A, and the SCI format 2-A includes the COT configuration information, the terminal B may transmit a signal/channel within the COT (e.g., COT initiated by the terminal A) associated with the COT configuration information. The terminal B may identify whether the COT is available using the COT configuration information and a destination ID included in the SCI format 2-A. When the COT initiated by the terminal A is available, the terminal B may transmit a signal/channel within the COT.

When a destination of SL transmission of the terminal B is the terminal A, the terminal B may perform the SL transmission using the COT initiated by the terminal A. When a destination ID of unicast SL transmission of the terminal B is the ID of the terminal A, the terminal B may perform the unicast SL transmission within the COT initiated by the terminal A. When a destination ID included in an SCI for unicast SL transmission of the terminal B is set to the ID of the terminal A, the terminal B may perform the unicast SL transmission within the COT initiated by the terminal A. In other words, the unicast SL transmission of the terminal B may be performed within the COT shared by the terminal A.

When a destination for unicast SL transmission of the terminal B is not the terminal A, the terminal B may not perform the unicast SL transmission within the COT initiated by the terminal A. In other words, the unicast SL transmission of the terminal B may not be performed within the COT shared by the terminal A. In this case, the terminal B may obtain a new COT for the unicast SL transmission, and perform the unicast SL transmission within the new COT.

When a destination ID for groupcast SL transmission of the terminal B is an ID of a group to which the terminal A belongs, the terminal B may perform the groupcast SL transmission within the COT initiated by the terminal A. When a destination ID included in an SCI for groupcast SL transmission of the terminal B is set to an ID of a group to which the terminal A belongs, the terminal B may perform the groupcast SL transmission within the COT initiated by the terminal A. In other words, the groupcast SL transmission of the terminal B may be performed within the COT shared by the terminal A.

When a destination ID for groupcast SL transmission of the terminal B is not an ID of a group to which the terminal A belongs, the terminal B may not perform the groupcast SL transmission within the COT initiated by the terminal A. In other words, the groupcast SL transmission of the terminal B may not be performed within the COT shared by the terminal A. In this case, terminal B may obtain a new COT for the groupcast SL transmission and perform the groupcast SL transmission within the new COT.

When a destination ID for groupcast SL transmission of the terminal B is the same as a destination ID for SL transmission of the terminal A, the terminal B may perform the groupcast SL transmission within the COT initiated by the terminal A. When a destination ID included in an SCI for groupcast SL transmission of the terminal B is the same as a destination ID for SL transmission of the terminal A, the terminal B may perform the groupcast SL transmission within the COT initiated by the terminal A. When a destination ID for groupcast SL transmission of the terminal B is different from a destination ID for SL transmission of the terminal A, the terminal B may not perform the groupcast SL transmission within the COT initiated by the terminal A. In this case, the terminal B may obtain a new COT for the groupcast SL transmission and perform the groupcast SL transmission within the new COT.

The terminal B may perform broadcast SL transmission within the COT initiated by the terminal A. Alternatively, the terminal B may not be able to perform broadcast SL transmission within the COT initiated by the terminal A. In this case, the terminal B may obtain a new COT for the broadcast SL transmission and perform the broadcast SL transmission within the new COT.

When the cast type indicator indicates groupcast, a sharing target of the COT initiated by the terminal A may be terminal(s) receiving groupcast SL transmission. When the terminal A performs groupcast SL transmission for a group including the terminal B and a terminal C using an SCI (e.g., SCI format 2-A), and the SCI (e.g., SCI format 2-A) includes COT configuration information, the terminal B and/or the terminal C may perform SL transmission within the COT initiated by the terminal A. The terminal B and/or terminal C may identify whether the COT is available based on the COT configuration information and a destination ID included in the SCI (e.g., SCI format 2-A). When the COT initiated by the terminal A is available, the terminal B and/or terminal C may perform SL transmission using the COT.

When the COT initiated by the terminal A is shared, and a destination for SL transmission of the terminal B and/or terminal C is the terminal A, the terminal B and/or terminal C may perform the SL transmission within the COT shared by the terminal A. When SL transmission of the terminal B and/or terminal C is unicast SL transmission, and a destination ID for the unicast SL transmission is the ID of the terminal A, the terminal B and/or terminal C may perform the SL transmission within the COT shared by the terminal A. When a destination ID included in an SCI for unicast SL transmission of the terminal B and/or terminal C is set to the ID of the terminal A, the terminal B and/or terminal C may perform the unicast SL transmission within the COT shared by the terminal A. When a destination for unicast SL transmission of the terminal B and/or terminal C is not the terminal A, the terminal B and/or terminal C may not perform the unicast SL transmission within the COT shared by the terminal A. In this case, the terminal B and/or terminal C may obtain a new COT for the unicast SL transmission and perform the unicast SL transmission within the new COT.

When a destination ID for groupcast SL transmission of the terminal B and/or terminal C is an ID of a group to which the terminal A belongs, the terminal B and/or terminal C may perform the groupcast SL transmission within the COT shared by the terminal A. When a destination ID included in an SCI for groupcast SL transmission of the terminal B and/or terminal C is an ID of a group to which the terminal A belongs, the terminal B and/or terminal C may perform the groupcast SL transmission within the COT shared by the terminal A. When a destination for groupcast SL transmission of the terminal B and/or terminal C is not a group to which the terminal A belongs, the terminal B and/or terminal C may not be able to perform the groupcast SL transmission within the COT shared by the terminal A. In this case, the terminal B and/or terminal C may obtain a new COT for the groupcast SL transmission and perform the groupcast SL transmission within the new COT.

The terminal B and/or terminal C may perform broadcast SL transmission within the COT initiated by the terminal A. Alternatively, the terminal B and/or terminal C may not be able to perform broadcast SL transmission within the COT initiated by the terminal A. In this case, the terminal B and/or terminal C may obtain a new COT for the broadcast SL transmission and perform the broadcast SL transmission within the new COT.

When the cast type indicator indicates broadcast, a sharing target of the COT initiated by the terminal A may be terminal(s) receiving broadcast SL transmission. When the terminal A performs broadcast SL transmission using an SCI (e.g., SCI format 2-A), and the SCI (e.g., SCI format 2-A) includes COT configuration information, terminal(s) receiving the SCI (e.g., SCI format 2-A) may perform SL transmission within the COT initiated by the terminal A. The terminal(s) may perform SL transmission using the COT shared by the terminal A based on the COT configuration information included in the SCI (e.g., SCI format 2-A).

When a destination for SL transmission is the terminal A, a terminal may perform the SL transmission within the COT shared by the terminal A. When a destination ID for unicast SL transmission of a terminal is the ID of the terminal A, the terminal may perform the unicast SL transmission within the COT shared by the terminal A. When a destination ID included in an SCI for unicast SL transmission of a terminal is set to the ID of the terminal A, the terminal may perform the unicast SL transmission within the COT shared by the terminal A. When the terminal A is not a destination of unicast SL transmission of a terminal, the terminal may not perform the SL transmission within the COT shared by the terminal A. In this case, the terminal may obtain a new COT for the unicast SL transmission and perform the unicast SL transmission within the new COT.

When a destination ID for groupcast SL transmission of the terminal B is an ID of a group to which the terminal A belongs, the terminal B may perform the groupcast SL transmission within the COT shared by the terminal A. When a destination ID included in an SCI for groupcast SL transmission of the terminal B is an ID of a group to which the terminal A belongs, the terminal B may perform the groupcast SL transmission within the COT shared by the terminal A. When a destination for groupcast SL transmission of the terminal B is not a group to which the terminal A belongs, the terminal B may not perform the groupcast SL transmission within the COT shared by the terminal A. In this case, the terminal B may obtain a new COT for the groupcast SL transmission and perform the groupcast SL transmission within the new COT.

A terminal may perform broadcast SL transmission within the COT shared by the terminal A. Alternatively, a terminal may not be able to perform broadcast SL transmission within the COT shared by the terminal A. In this case, the terminal may obtain a new COT for the broadcast SL transmission and perform the broadcast SL transmission within the new COT.

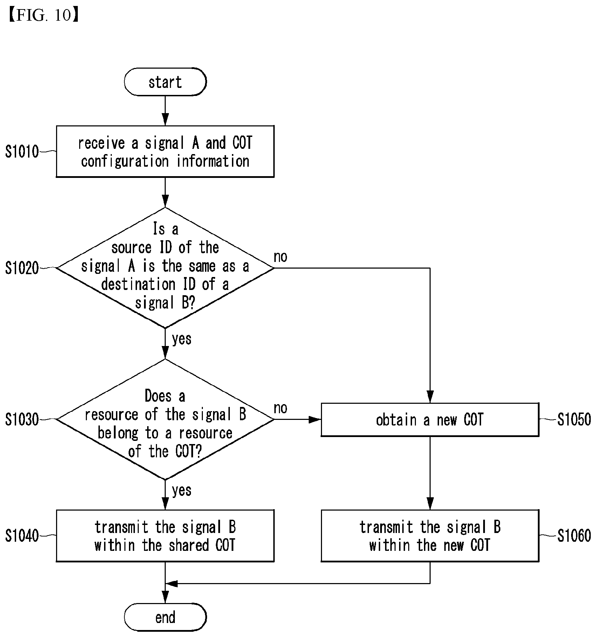

FIG. 10 is a flowchart illustrating a second exemplary embodiment of a communication method in an unlicensed band.

Referring to FIG. 10, the terminal A may transmit a signal/channel and COT configuration information (e.g., COT sharing information) to the terminal B. The terminal B may receive the signal/channel and COT configuration information from the terminal A (S1010). The signal/channel and the COT configuration information may be transmitted independently. Alternatively, the COT configuration information may be included in the signal/channel. The COT configuration information may be transmitted to the terminal B through signaling. The signaling may be at least one of system information (SI) signaling, RRC signaling, MAC CE signaling, or PHY signaling.

The terminal B may compare a source ID for the signal/channel received from the terminal A and a destination ID for a signal/channel to be transmitted by the terminal B (S1020). The signal/channel transmitted by the terminal A may be referred to as a signal A, and the signal/channel to be transmitted by the terminal B may be referred to as a signal B. The terminal B may determine a COT in which the signal B is to be transmitted based on a result of the step S1020.

When the source ID for the signal A is the same as the destination ID for the signal B, the terminal B may determine whether a time and/or frequency resource for transmission of the signal B belongs to a time and/or frequency resource of the COT initiated by the terminal A (S1030). The terminal B may determine a COT in which the signal B is to be transmitted based on a result of the step S1030. When the time and/or frequency resource for transmission of the signal B belongs to the time and/or frequency resource of the COT initiated by the terminal A, the terminal B may transmit the signal B within the COT initiated by the terminal A (S1040 ). In other words, the terminal B may share the COT initiated by the terminal A.

When the source ID for the signal A is determined to be different from the destination ID for the signal B in the step S1020, the terminal B may obtain a new COT for transmission of the signal B (S1050). The terminal B may transmit the signal B within the new COT (S1060). When the time and/or frequency resource for transmission of the signal B is determined not to belong to the time and/or frequency resource of the COT initiated by the terminal A in the step S1030, the terminal B may obtain a new COT for transmission of the signal B ( S1050). The terminal B may transmit the signal B within the new COT (S1060).

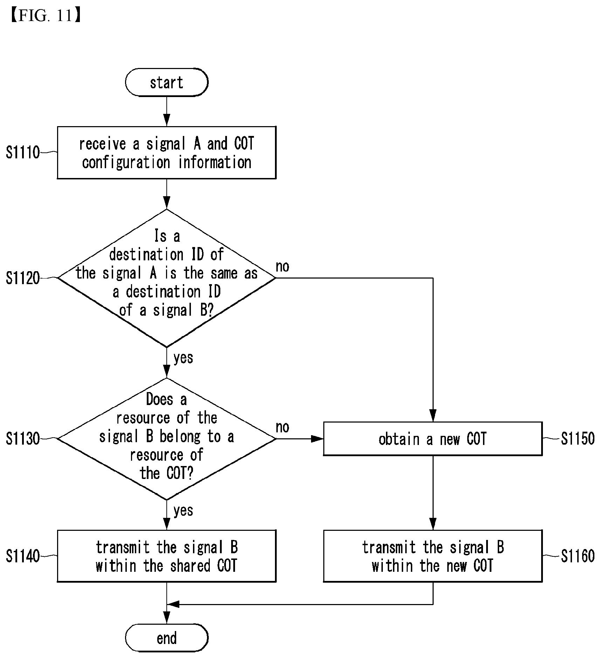

FIG. 11 is a flowchart illustrating a third exemplary embodiment of a communication method in an unlicensed band.

Referring to FIG. 11, the terminal A may transmit a signal/channel (e.g., signal A) and COT configuration information (e.g., COT sharing information) to the terminal B. The terminal B may receive the signal A and COT configuration information from the terminal A (S1110). The signal A and the COT configuration information may be transmitted independently. Alternatively, the COT configuration information may be included in the signal A. The COT configuration information may be transmitted to the terminal B through signaling.

The terminal B may compare a destination ID for the signal A received from the terminal A with a destination ID for a signal/channel (e.g., signal B) to be transmitted by the terminal B (S1120). The terminal B may determine a COT in which the signal B is to be transmitted based on a result of the step S1120.

When the destination ID for the signal A is the same as the destination ID for the signal B, the terminal B may determine whether a time and/or frequency resource for transmission of the signal B belongs to a time and/or frequency resource of the COT initiated by the terminal A (S1130). The terminal B may determine a COT in which the signal B is to be transmitted based on a result of the step S1130. When the time and/or frequency resource for transmission of the signal B belongs to the time and/or frequency resource of the COT initiated by the terminal A, the terminal B may transmit the signal B within the COT initiated by the terminal A (S1140). In other words, the terminal B may share the COT initiated by the terminal A.

When the destination ID for the signal A is determined to be different from the destination ID for the signal B in the step S1120, the terminal B may obtain a new COT for transmission of the signal B (S1150). The terminal B may transmit the signal B within the new COT (S1160). When the time and/or frequency resource for transmission of the signal B is determined not to belong to the time and/or frequency resource of the COT initiated by the terminal A in the step S1130, the terminal B may obtain a new COT for transmission of the signal B ( S1150). The terminal B may transmit the signal B within the new COT (S1160).

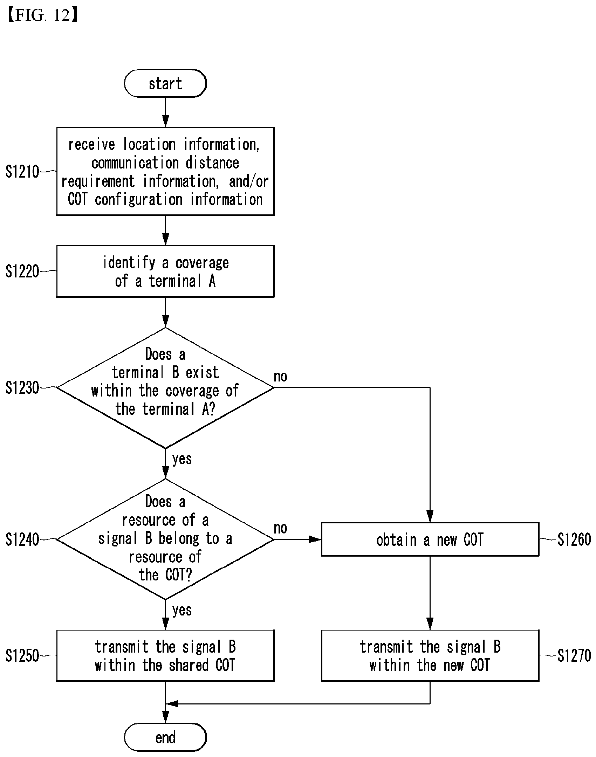

FIG. 12 is a flowchart illustrating a fourth exemplary embodiment of a communication method in an unlicensed band.

Referring to FIG. 12, the terminal A may transmit to the terminal B at least one of location information, communication distance requirement information, coverage information, or COT configuration information of the terminal A. The terminal B may receive from the terminal A at least one of the location information, communication distance requirement information, coverage information, or COT configuration of the terminal A (S1210). The terminal B may identify a coverage of the terminal A based on the information received from the terminal A (S1220).

The terminal B may identify whether the terminal B exists within the coverage of the terminal A based on a location of the terminal B (S1230). When the terminal B exists within the coverage of the terminal A, the terminal B may determine whether a time and/or frequency resource for transmission of a signal/channel (e.g., signal B) to be transmitted by the terminal B belongs to a time and/or frequency resource of the COT initiated by the terminal A (S1240). The terminal B may determine a COT in which the signal B is to be transmitted based on a result of the step S1240. When the time and/or frequency resource for transmission of the signal B is determined to belong to the time and/or frequency resource of the COT initiated by the terminal A, the terminal B may transmit the signal B within the COT initiated by the terminal A (S1250). In other words, the terminal B may share the COT initiated by the terminal A.

When the terminal B is determined not to exist within the coverage of the terminal A in the step S1230, the terminal B may obtain a new COT for transmission of the signal B (S1260). The terminal B may transmit the signal B within the new COT (S1270). When the time and/or frequency resource for transmission of the signal B is determined not to belong to the time and/or frequency resource of the COT initiated by the terminal A, the terminal B may obtain a new COT for transmission of the signal B (S1260). The terminal B may transmit the signal B within the new COT (S1270).

Meanwhile, the terminal A may configure the COT and share the COT with the terminal B. In other words, the terminal A may transmit COT sharing information (e.g., COT configuration information) to the terminal B. The terminal B may receive the COT sharing information from the terminal A, and identify the COT shared by the terminal A based on the COT sharing information. For example, the terminal B may identify the time and/or frequency resource of the COT shared by the terminal A. The terminal B may perform sidelink-synchronization signal block (S-SSB) transmission within the shared COT.

The S-SSB transmission may be performed according to a preset periodicity. When an S-SSB transmission time according to the S-SSB transmission periodicity belongs to the COT shared by the terminal A, the terminal B may perform S-SSB transmission within the shared COT. When an S-SSB transmission time according to the S-SSB transmission periodicity does not belong to the COT shared by the terminal A, the terminal B may not perform S-SSB transmission within the shared COT. In this case, the terminal B may perform a separate channel access procedure for S-SSB transmission, and may perform the S-SSB transmission when the channel access procedure succeeds.

The S-SSB transmission may be performed in a preconfigured resource (e.g., preconfigured frequency resource). If the frequency resource of the S-SSB belongs to the COT shared by the terminal A, the terminal B may perform the S-SSB transmission within the shared COT. If the frequency resource of the S-SSB does not belong to the COT shared by the terminal A, the terminal B may not perform the S-SSB transmission within the shared COT. In this case, the terminal B may perform a separate channel access procedure for the S-SSB transmission, and may perform the S-SSB transmission when the channel access procedure succeeds.

The terminal A may transmit a PSCCH and/or PSSCH (e.g., control information and/or data) to the terminal B. The terminal B may receive the PSCCH and/or PSSCH from the terminal A, and may transmit a HARQ feedback (e.g., HARQ-ACK response) for the PSCCH and/or PSSCH to the terminal A. The HARQ feedback may be transmitted on a PSFCH.

The terminal A may initiate the COT and share the COT with the terminal B. For example, the terminal A may transmit COT sharing information (e.g., COT configuration information) to the terminal B. The terminal B may receive the COT sharing information from the terminal A, and identify the shared COT based on the COT sharing information. The terminal B may perform PSFCH transmission (e.g., transmission of HARQ feedback) within the COT shared by the terminal A.

When the COT initiated by the terminal A is shared with the terminal B, and a PSFCH to be transmitted by the terminal B includes at least one HARQ feedback for SL transmission (e.g., PSCCH transmission and/or PSSCH transmission) of the terminal A, the terminal B may perform PSFCH transmission within the COT shared by the terminal A. The PSFCH transmission may be transmission of a HARQ feedback for the terminal A. Alternatively, the PSFCH transmission may be transmission of a HARQ feedback for the terminal A and a HARQ feedback for another terminal. If a time and/or frequency resource for PSFCH transmission of the terminal B belongs to the time and/or frequency resources of the COT shared by the terminal A, the terminal B may perform the PSFCH transmission within the COT shared by the terminal A.

When the COT initiated by the terminal A is shared with the terminal B, and a PSFCH to be transmitted by the terminal B does not include a HARQ feedback for SL transmission (e.g., PSCCH transmission and/or PSSCH transmission) of the terminal A, the terminal B may not perform PSFCH transmission within the COT shared by the terminal A. In this case, the terminal B may perform a separate channel access procedure for the PSFCH transmission, and may perform the PSFCH transmission when the channel access procedure succeeds.

The terminal A may transmit a PSCCH and/or PSSCH to the terminal B. The terminal A may transmit COT sharing information to the terminal B. The terminal B may receive the PSCCH and/or PSSCH from the terminal A. The terminal B may receive the COT sharing information from the terminal A.

The terminal B may identify the COT shared by the terminal A based on the COT sharing information received from the terminal A. In other words, the COT initiated by the terminal A may be shared with the terminal B. The terminal B may perform PSCCH transmission and/or PSSCH transmission within the COT shared by the terminal A. When a destination of SL transmission of the terminal B is the terminal A, the terminal B may perform the SL transmission (e.g., PSCCH transmission and/or PSSCH transmission) within the COT shared by the terminal A. When a destination of SL transmission of the terminal B includes the terminal A, the terminal B may perform the SL transmission (e.g., PSCCH transmission and/or PSSCH transmission) within the COT shared by the terminal A. When a time and/or frequency resource for SL transmission of the terminal B belongs to a time/frequency resource indicated by the COT sharing information of the terminal A (e.g., time and/or frequency resource of the COT shared by the terminal A), the terminal B may perform the SL transmission (e.g., PSCCH transmission and/or PSSCH transmission) within the COT shared by the terminal A.

When a destination of SL transmission of the terminal B does not include the terminal A, the terminal B may not perform the SL transmission (e.g., PSCCH transmission and/or PSSCH transmission) within the COT shared by the terminal A. In this case, the terminal B may perform a separate channel access procedure for the SL transmission, and may perform the SL transmission (e.g., PSCCH transmission and/or PSSCH transmission) when the channel access procedure succeeds.

The methods according to the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of a first terminal, comprising:
receiving, from a second terminal, sharing information of a channel occupancy time (COT) initiated by the second terminal;
determining whether sidelink (SL) transmission of the first terminal is possible within the COT based on the sharing information; and
in response to determining that the SL communication is possible within the COT, performing the SL transmission within the COT shared by the second terminal.

2. The method according to claim 1, wherein the sharing information includes at least one of a source identifier (ID), destination ID, channel access priority class (CAPC), remaining COT duration, or frequency domain information of the COT.

3. The method according to claim 1, wherein the COT is initiated by a type 1 listen-before-talk (LBT) operation of the second terminal, the SL transmission of the first terminal within the COT is performed based on a type 2 LBT operation, the type 1 LBT operation is performed in a variable time period, and the type 2 LBT operation is performed in a fixed time period.

4. The method according to claim 1, wherein when the SL transmission is unicast SL transmission, a source of the unicast SL transmission is equal to a destination of transmission of the second terminal, and a destination of the unicast SL transmission is equal to a source of transmission of the second terminal, the unicast SL transmission is performed within the COT shared by the second terminal.

5. The method according to claim 1, wherein when the SL transmission is groupcast SL transmission and a destination of the groupcast SL transmission is equal to a destination of transmission of the second terminal, the groupcast SL transmission is performed within the COT shared by the second terminal.

6. The method according to claim 1, wherein when the SL transmission is broadcast SL transmission and a destination of the broadcast SL transmission is equal to a destination of transmission of the second terminal, the broadcast SL transmission is performed within the COT shared by the second terminal.

7. The method according to claim 1, wherein the performing of the SL transmission comprises: transmitting a sidelink-synchronization signal block (S-SSB) within the COT.

8. The method according to claim 1, wherein when the SL transmission is physical sidelink feedback channel (PSFCH) transmission, and the PSFCH transmission includes hybrid automatic repeat request (HARQ) feedback transmission for the second terminal, the PSFCH transmission is performed within the COT shared by the second terminal.

9. The method according to claim 1, wherein when a resource for the SL transmission belongs to a resource of the COT, the SL transmission is performed within the COT.

10. A first terminal comprising at least one processor, wherein the at least one processor causes the first terminal to perform:
receiving, from a second terminal, sharing information of a channel occupancy time (COT) initiated by the second terminal;
determining whether sidelink (SL) transmission of the first terminal is possible within the COT based on the sharing information; and
in response to determining that the SL communication is possible within the COT, performing the SL transmission within the COT shared by the second terminal.

11. The first terminal according to claim 10, wherein the sharing information includes at least one of a source identifier (ID), destination ID, channel access priority class (CAPC), remaining COT duration, or frequency domain information of the COT.

12. The first terminal according to claim 10, wherein the COT is initiated by a type 1 listen-before-talk (LBT) operation of the second terminal, the SL transmission of the first terminal within the COT is performed based on a type 2 LBT operation, the type 1 LBT operation is performed in a variable time period, and the type 2 LBT operation is performed in a fixed time period.

13. The first terminal according to claim 10, wherein when the SL transmission is unicast SL transmission, a source of the unicast SL transmission is equal to a destination of transmission of the second terminal, and a destination of the unicast SL transmission is equal to a source of transmission of the second terminal, the unicast SL transmission is performed within the COT shared by the second terminal.

14. The first terminal according to claim 10, wherein when the SL transmission is groupcast SL transmission and a destination of the groupcast SL transmission is equal to a destination of transmission of the second terminal, the groupcast SL transmission is performed within the COT shared by the second terminal.

15. The first terminal according to claim 10, wherein when the SL transmission is broadcast SL transmission and a destination of the broadcast SL transmission is equal to a destination of transmission of the second terminal, the broadcast SL transmission is performed within the COT shared by the second terminal.

16. The first terminal according to claim 10, wherein in the performing of the SL transmission, the at least one processor further causes the first terminal to perform: transmitting a sidelink-synchronization signal block (S-SSB) within the COT.

17. The first terminal according to claim 10, wherein when the SL transmission is physical sidelink feedback channel (PSFCH) transmission, and the PSFCH transmission includes hybrid automatic repeat request (HARQ) feedback transmission for the second terminal, the PSFCH transmission is performed within the COT shared by the second terminal.

18. The first terminal according to claim 10, wherein when a resource for the SL transmission belongs to a resource of the COT, the SL transmission is performed within the COT.
